Europäisches Patentamt

European Patent Office

Office européen des brevets

(19)

(11) Publication number : **0 478 312 A2**

# (12) EUROPEAN PATENT APPLICATION

(21) Application number : **91308755.7**

(51) Int. Cl.⁵ : **G11B 21/10**

(22) Date of filing : **25.09.91**

(30) Priority : **27.09.90 JP 255469/90**

(43) Date of publication of application :
**01.04.92 Bulletin 92/14**

(84) Designated Contracting States :
**DE FR GB**

(71) Applicant : **International Business Machines Corporation**
**Old Orchard Road**
**Armonk, N.Y. 10504 (US)**

(72) Inventor : **Kagami, Naoyuki,**
**Shounanlifetownhanezawadanchi**
**26-305, 921 Banchi Endoh**
**Fujisawa-shi, Kanagawa-ken (JP)**
Inventor : **Kubo, Hiroaki**
**1624 Banchino 35, Nanasawa**
**Atsugi-shi, Kanagawa-ken (JP)**
Inventor : **Ueno, Hideo**
**Newheimsakuragaoka 306 goh, 3-16-7 Fukuda**
**Yamato-shi, Kanagawa-ken (JP)**

(74) Representative : **Killgren, Neil Arthur**
**IBM United Kingdom Limited Intellectual**
**Property Department Hursley Park**
**Winchester Hampshire SO21 2JN (GB)**

(54) Optical disk drive initialisation method.

(57) The invention relates a method for initialising the position of an optical head wherein an optical head can be positioned about the centre of the optical disk by using tracking error signals which are generated when a laser beam crosses guide grooves of the optical disk. The head is first positioned to the innermost position and then moved outward until tracking error signal is detected, that is, until it enters data area. The target is determined in relation to the distance the head has moved when TES is detected. There is provided a method for initialising an optical disk drive apparatus comprising steps of holding an optical pickup against the innermost of an optical disk, moving the optical pickup slowly to the outer of the disk until it detects tracking error signals, accelerating it when it detects tracking error signals, decelerating it thereafter, and finally stopping it to be positioned about the centre of the disk.

EP 0 478 312 A2

Relative position
detecting sensor

| 10 | → | Relative posi-<br>tion amplifier<br>/controller | → | Coarse servo<br>controller | | Coarse VCM<br>driver | → | To optical<br>pickup 3 |

11

12

13

14

Tracking error signal

| Tracking<br>sensor | → | Tracking<br>amplifier/<br>controller |

15        16

| Track counter | ← | Seek<br>circuit |

21        22

17

| Tracking<br>servo<br>controller | → | Tracking<br>servo<br>driver | → | To tracking<br>actuator 4 |

18        19

| Velocity<br>profile<br>R O M |

23

C P U

20

24

| Velocity<br>profile<br>generator |

25

FIG.1

The invention relates to an optical disk drive apparatus, and is particularly concerned with a method for initializing the optical disk drive apparatus.

In an optical disk apparatus for reading and reproducing a signal recorded in a recording track on an optical disk, an optical disk drive apparatus, comprising an optical pickup which projects the optical beam onto the recording track on the disk and reads a recorded signal and a body provided with the optical pickup, is generally used to move an optical beam to a target recording track.

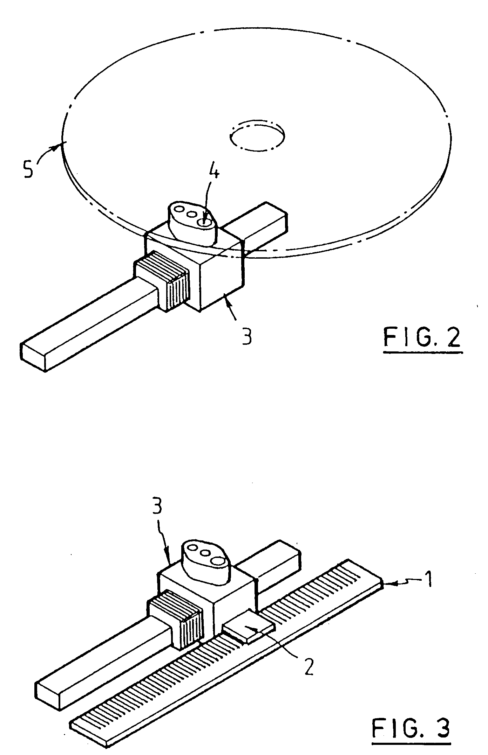

Usually, before the optical disk drive apparatus can perform the servo control, an initialize operation, for example, such as calibration, etc. must be performed to keep the amount of scatter in positioning the optical drive apparatus and the optical disk constant. FIG.3 a schematic view showing the construction of a conventional optical disk drive apparatus. In the figure, a linear scale 1 having notched grooves is attached to a drive apparatus body (not sown in the figure) and a dedicated sensor 2 for reading the number of the grooves on the linear scale 1 is attached to an optical pickup 3.

In an initializing operation in such a case, the optical pickup 3 is driven first, to hold the optical pickup 3 against one end of the linear scale 1. Then the optical pickup 3 moves decelerating from the end held against toward the other end and, at the same time, the dedicated sensor 2 reads the number of grooves through which the optical pickup 3 is moving. If the number of grooves read by the dedicated sensor 2 reaches a predetermined number of grooves, the optical pickup 3 stops driving. Thus the optical disk drive apparatus can be positioned near the center of the optical disk.

Further, the optical pickup 3 can move to a target track position under dedicated servo control through the use of the dedicated sensor 2.

Instead of the linear scale 1 and the dedicated sensor 2, a potentiometer is sometimes used.

In the conventional method for initializing an optical disk drive apparatus, since a dedicated sensor for detecting the absolute position of an optical pickup is needed to position the optical pickup near the center of an optical disk, there is a problem that an expensive large-sized apparatus is needed. In the case of a conventional optical disk drive apparatus which is not provided with the above dedicated sensor, there is another problem that an initializing operation cannot be performed even if an attempt to initialize the optical disk drive apparatus is made.

According to the present invention there is provided a method for initializing an optical disk drive apparatus having an optical pickup for reading recording information on an optical disk through a laser beam and tracking error detecting means for detecting a tracking error signal generated when said laser beam crosses a guide groove on said optical disk, the method comprising the steps of: positioning said optical pickup at an innermost position on an optical disk, applying force on to said optical pickup to drive it toward the outer area of the optical disk until said tracking error detecting means has detected the generation of a tracking error signal, accelerating said optical pickup after said tracking error signal has been detected, then decelerating said optical pickup, and finally stopping said optical pickup so as to come to rest near the center of said optical disk, said acceleration, deceleration and stopping being performed in accordance with a predetermined velocity profile.

In an embodiment of the invention the method further comprises the steps of storing a first amount of movement provided to said optical pickup at a time when said tracking error signal has been detected, and wherein said acceleration, deceleration and stopping comprises the steps of providing a second amount of movement, equal to the sum of said first amount of movement and a predetermined amount, for said optical pickup to move said optical pickup at an accelerated speed toward the outer area of said optical disk, monitoring the movement of said optical pickup, providing a third amount of movement, equal to the difference obtained as the result of said first amount of movement minus the predetermined amount, for said optical pickup to decelerate said optical pickup, monitoring the completion of said step of decelerating, and providing a fourth amount of movement slightly smaller than said first amount of movement for said optical pickup to stop said optical pickup.

The invention enables the above problems to be solved, by providing a method for initializing an optical disk drive apparatus, wherein an optical pickup can be positioned near the center of an optical disk by a tracking error signal without the use of dedicated sensor and the optical disk apparatus can be accurately positioned even if the optical disk drive apparatus is tilted at an angle.

According to the method for initializing an optical disk drive apparatus provided by the invention, a optical pickup is placed first on the innermost circumference of an optical disk, then the optical pickup moves toward the outer area of the optical disk by force gradually applied on the optical pickup, the optical pickup moves slowly until the generation of a tracking error signal (TES) is detected, the optical pickup accelerates after the TES has been detected and then decelerates, and finally stops so that the optical pickup is positioned near the center of the optical disk.

Even if an optical disk drive apparatus inclines to one side, the optical pickup can be positioned ear the center of the optical disk by using a tracking error signal.

An embodiment of the invention will now be described, by way of example, with reference to the accompanying drawings, wherein:

FIG.1 is a block diagram showing a driver of an optical disk drive apparatus according to an embodiment of the invention;

FIG.2 is a schematic view showing the construction of an optical disk drive apparatus;

FIG.3 is a schematic view showing the construction of a conventional optical disk drive apparatus.

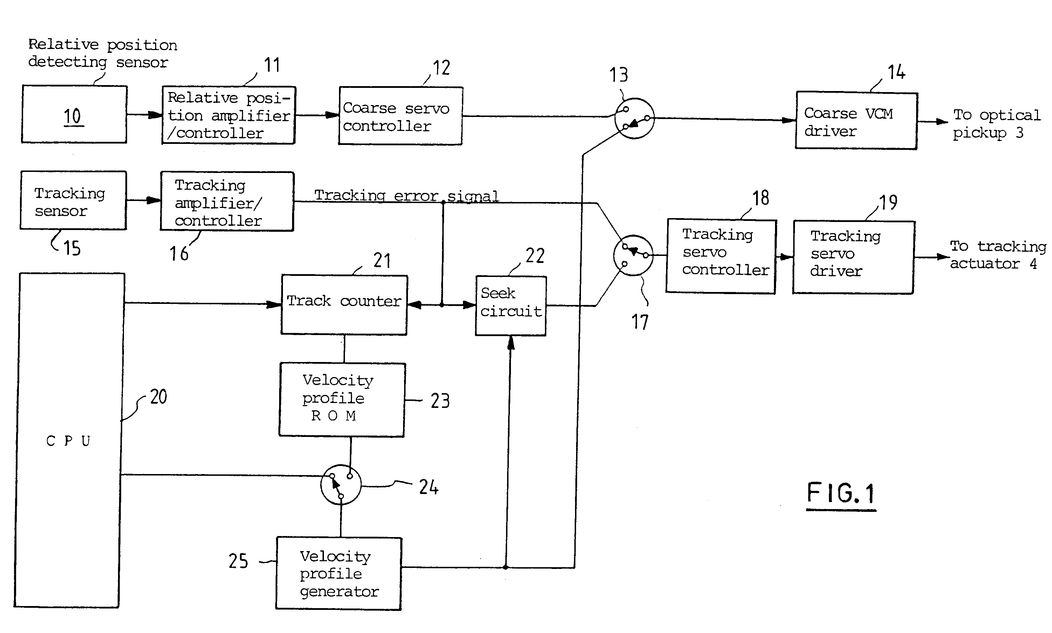

FIG.1 is a block diagram showing a driver in an optical disk drive apparatus according to an embodiment of the invention. FIG.2 is a schematic view of an optical disk drive apparatus. In FIG.1, an output of a relative position detecting sensor 10 is connected, through a relative position detecting amplifier/controller 11, to a coarse servo controller 12. An output of the coarse servo controller 12 is connected, through one switching terminal of a first switch 13, to a coarse voice coil motor (VCM) driver 14, an output of which is connected to an optical pickup 3 as in FIG.2.

On the other hand, an output of a tracking sensor 15 is connected to a tracking amplifier/controller 16. An output of the tracking amplifier/controller 16 is connected not only to inputs of a track counter 21 and a seek circuit 22, through one switching terminal of a second switch 17, but also to a tracking servo controller 18. An output of the tracking servo controller 18 is connected to a tracking VCM driver 19 an output of which is connected to a tracking actuator 4, as in FIG.2. The track counter 21 is connected not only to a CPU 20 as well as a seek circuit 22, but to a velocity profile ROM 23. One switching terminal of a third switch 24 is connected to the CPU 20 and, on the other hand, the other switching terminal of the third switch 24 is connected to the velocity profile ROM 23. A velocity profile generator 25 is connected not only to the third switch 24, but to the seek circuit 22 and the other switching terminal of the first switch 13. The velocity profile generator 25 has the same function as a D/A converter.

In the following, operations are described referring to FIG.1 and FIG.2.

At the time of initialization after power on, the third switch 24 is operated so that one switching terminal of the third switch 24 is connected to the CPU 20. The operation thus performed causes the CPU 20 to provide the velocity profile generator 25 with velocity profile data. The data is converted to analog data by the velocity profile generator 25 to move the optical pickup 3, shown in FIG.2, toward the inner area on an optical disk 5 and is then provided to the coarse VCM driver 14 through the first switch 13 to push the optical pickup 3 towards a position at which no track guide groove is formed in the inner area of the optical disk 5. Then the CPU 20, through the third switch 24, provides the velocity profile generator 25 with predetermined velocity profile data, which a predetermined driving amount is supplied to the coarse VCM driver 14 through the first switch 13, to move the optical pickup 3 toward the outer area of the optical disk 5. Hereupon, the tracking sensor 15 detects a tracking error signal (TES) generated at a time when a laser beam from the optical pickup 3 crosses a track guide groove on the optical disk 5. The TES signal is applied to the track counter 21. By examining a value of the track counter 21 at all times, the movement of the optical pickup 3 which crosses a track guide groove on the optical disk 5 is checked to detect that the optical pickup 3 has started to move toward the outer area of the optical disk 5.

If the optical disk drive apparatus inclines to one side, the CPU 20 provides the velocity profile generator 25, which generates force that moves the optical pickup 3 toward the outer area on the optical disk 5 until the optical pickup 3 moves across a track guide groove, with predetermined profile data.

When the track guide groove on the optical disk 5, over which the optical pickup 3 moves, as shown above, has been detected by the track counter 21, the CPU 20 stores velocity profile data VO, provided to the velocity profile generator 25 through the third switch 24, in the memory of the CPU 20.

Then, based on the data VO, the CPU 20 provides the velocity profile generator 25 with velocity profile data VO + $\alpha$ through the third switch 24 to accelerate and move the optical pickup 3 toward the outer area on the optical disk 5.

In this case, to check the movement of the optical pickup 3, the CPU 20 repeatedly reads out values of the track counter 21 until the CPU 20 detects that a value of the track counter 21 has reached a predetermined value.

Then, based on the above velocity profile data Vo stored, CPU 20 provides, through the third switch 24, the velocity profile generator 25 with the velocity profile data VO - $\alpha$ required to slightly move the optical pickup 3 toward an inner area on the optical disk 5.

To thus complete the deceleration of the optical pickup 3, the CPU 20 repeatedly reads out values of the track counter 21, as shown above, until the CPU 20 detects that a vale of the track counter 21 has reached a predetermined value.

Then, when velocity profile data VO - $\beta$ (where $\beta$ is very much smaller than $\alpha$) smaller than the above velocity profile data VO is provided to the velocity profile generator 25 by the CPU 20 through the third switch 24, the optical pickup 3 stops moving. In this case, the pickup 3 stops near the center of the optical disk 5.

Further, a usual servo control operation is performed by the system of the relative position detecting sensor 10, the relative position detecting amplifier/controller 11, the coarse servo controller 12, the coarse VCM driver 14, and the optical pickup 3.

On the other hand, a tracking operation is performed by the system of the tracking sensor 15, the tracking amplifier/controller 16, the tracking servo controller 18, the tracking VCM driver 19, and the tracking actuator 4.

Further, a seek operation, after the second switch 17 is switched to the seek circuit 22, is performed by a loop formed by the track counter 21, the velocity profile ROM 23, the third switch 24, velocity profile generator 25, and the seek circuit 22. Since the seek operation thus performed is the same as a conventional seek operation, further particulars is not described.

In the above embodiment, a track counter is used to detect a track guide groove on the optical disk 5, however, it will be appreciated that a TES signal can be directly inputted to the CPU 20 to detect the TES signal by means of the CPU 20 for the purpose of having the same effect as in the above embodiment.

The invention, as described above, provides a method for initializing an optical disk drive apparatus wherein an optical pickup can be surely positioned near the center of an optical disk by using a tracking error signal, even if the optical disk drive apparatus inclines to one side, without the need of using conventional dedicated sensors. Accordingly, the invention has the advantage that a smaller sized apparatus can be obtained inexpensively.

**Claims**

1. A method for initializing an optical disk drive apparatus having an optical pickup for reading recording information on an optical disk through a laser beam and tracking error detecting means for detecting a tracking error signal generated when said laser beam crosses a guide groove on said optical disk, the method comprising the steps of:

   positioning said optical pickup at an innermost position on an optical disk,

   applying force on to said optical pickup to drive it toward the outer area of the optical disk until said tracking error detecting means has detected the generation of a tracking error signal,

   accelerating said optical pickup after said tracking error signal has been detected, then

   decelerating said optical pickup, and

   finally stopping said optical pickup so as to come to rest near the center of said optical disk, said accelaration, deceleration and stopping being performed in accordance with a predetermined velocity profile.

2. A method for initialising an optical disk drive apparatus as claimed in claim 1 comprising the step of

   storing a first amount of movement provided to said optical pickup at a time when said tracking error signal has been detected,

   and wherein said acceleration, deceleration and stopping comprises the steps of

   providing a second amount of movement, equal to the sum of said first amount of movement and a predetermined amount, for said optical pickup to move said optical pickup at an accelerated speed toward the outer area of said optical disk,

   monitoring the movement of said optical pickup,

   providing a third amount of movement, equal to the difference obtained as the result of said first amount of movement minus the predetermined amount, for said optical pickup to decelerate said optical pickup,

   monitoring the completion of said step of decelerating, and

   providing a fourth amount of movement slightly smaller than said first amount of movement for said optical pickup to stop said optical pickup.

3. A method as claimed in claim 2 wherein in said monitoring step the value of a track counter for counting said tracking error signal is examined.

4. A method as claimed in claim 2 or claim 3 wherein said amounts of movement are provided by providing data from control means to velocity generating means.

5. A method as claimed in any of claims 2 to 4 wherein said steps (g) and (i) are performed using said track counter.

6. A method as claimed in claim 4 wherein said control means is implemented by microprocessors.

7. A method as claimed in claim 4 wherein said control means is means is implemented by a D/A converter.

Relative position
detecting sensor

| 10 | → | Relative posi-<br>tion amplifier<br>/controller | → | Coarse servo<br>controller | | Coarse VCM<br>driver | → To optical<br>pickup 3 |

11

12

13

14

| Tracking<br>sensor | → | Tracking<br>amplifier/<br>controller |

15

16

Tracking error signal

18

19

| Tracking<br>servo<br>controller | | Tracking<br>servo<br>driver | → To tracking<br>actuator 4 |

17

| Track counter | | Seek<br>circuit |

21

22

| C P U |

20

| Velocity<br>profile<br>R O M |

23

24

| Velocity<br>profile<br>generator |

25

FIG.1

EP 0 478 312 A2

6

FIG. 2

FIG. 3